# EUROPÄISCHE PATENTANMELDUNG

(11) **EP 0 673 988 A1**
(43) Veröffentlichungstag der Anmeldung: **27.09.1995**
(21) Anmeldenummer: 95103534.4
(22) Anmeldetag: 11.03.1995
(51) Int. Cl.: C10B 53/00

(54) **Verfahren zur Volumensverkleinerung von Aschen**

(30) Priorität: 22.03.1994 AT 597/94
(71) Anmelder: AUSTRIAN ENERGY & ENVIRONMENT SGP/WAAGNER-BIRO GmbH, A-1211 Wien (AT)
(72) Erfinder: Kahr, Gerhard, Dipl.-Ing. Dr., A-2542 Kottingbrunn (AT); Bichler, Michaela, Dipl.-Ing., A-4020 Linz (AT); Autengruber, Konrad, Dipl.-Ing., A-4802 Ebensee (AT)
(74) Vertreter: Wallner, Gerhard, Dipl.-Ing.

(57) **Zusammenfassung**

Zur Volumensverkleinerung von Aschen insbesondere von Filteraschen aus der Verbrennung von Erdölprodukten werden die kohlenstoffreichen, insbesondere rußhaltigen Aschen mit einem kohlenstoffhältigen Bindemittel vermischt und kompaktiert sowie anschließend einer Verbrennung, vorzugsweise einer Wirbelschicht und gegebenenfalls die festen Reststoffe aus der Verbrennung einer weiteren Behandlung unterzogen. Insbesondere werden die festen Reststoffe in eine Feinfraktion zu Extraktion der Schwermetalle und eine Grobfraktion zur Rückführung in die Wirbelschicht, getrennt.

## Beschreibung

Die Erfindung betrifft ein Verfahren zur Volumensverkleinerung von Aschen, insbesondere Filteraschen aus der Verbrennung von Erdölprodukten.

Es ist bekannt, daß Aschen aus Verbrennungsanlagen und auch von Pyrolyseanlagen deponiert werden, wobei schädliche organische Verbindungen wasserlösliche Salze und Schwermetalle eine Deponierung in speziell abgesicherten Deponien verlangen. Es ist aus der EP-A1-566376 bekannt, Flugasche anzufeuchten, durchzukneten und anschließend zu sintern, wobei jedoch die Inhaltsstoffe nicht vermindert werden. Die US-A-4997711 offenbart die Sinterung der Flugasche unter Druck, wodurch eine Volumensverminderung aber keine Gewichtsverminderung gegeben ist. Aus der EP-A1-547923 ist es bekannt, schädliche Inhaltsstoffe der Flugaschen innerhalb derselben chemisch zu binden, wodurch das Aschenvolumen sicher nicht vermindert wird.

Da das Beseitigen der Abfälle kostenintensiv ist, ist man bestrebt, das Volumen der Abfälle zu vermindern, und durch Reduzierung der lösbaren Bestandteile eine Deponierungsmöglichkeit ohne Sonderabfallstatus zu erreichen. Daher hat es sich die Erfindung zur Aufgabe gestellt, den Zielvorgaben der Gesetzgeber nachzukommen und ein Behandlungsverfahren für anfallende Aschen zur Volumens- und Gewichtsverkleinerung zu finden.

In Aschen und Filterstäuben sind wertvolle Schwermetalle in geringen Konzentrationen enthalten, die als Oxide leicht löslich sind und daher oftmals den Sondermüllstatus derselben bestimmen, sodaß deren Wiedergewinnung angestrebt wird. Der wirtschaftlichen Gewinnung steht aber entgegen, daß relativ viel uninteressantes Material bewegt werden muß, zu welchem rußhaltige Rückstände, insbesondere nach einer Erdölproduktenverbrennungsanlage, gehören. Durch Verbrennung dieser Rückstände wird somit das Schwermetall angereichert. Die Entfernung der rußhaltigen Rückstände erlaubt aber auch die Verwendung der Filterstäube, bzw. deren Weiterverarbeitung zu Baustoffen.

Die vorliegende Erfindung ist dadurch gekennzeichnet, daß die kohlenstoffreichen, insbesondere rußhaltigen Aschen mit einem kohlenstoffhaltigen Bindemittel vermischt und kompaktiert sowie anschließend einer Verbrennung vorzugsweise in einer Wirbelschicht, und gegebenenfalls die festen Reststoffe aus der Verbrennung einer weiteren Behandlung unterzogen werden. Durch die Vermischung mit dem Bindemittel und Kompaktierung der Masse, werden die Aschen zwischenlagerfähig und können problemlos transportiert werden, sodaß sie zentral weiter verarbeitet werden können. Weitere wesentliche Ausgestaltungen der Erfindung sind in den Unteransprüchen 2 - 9 angegeben.

Die Erfindung wird anhand der angeschlossenen Figur beispielsweise erklärt.

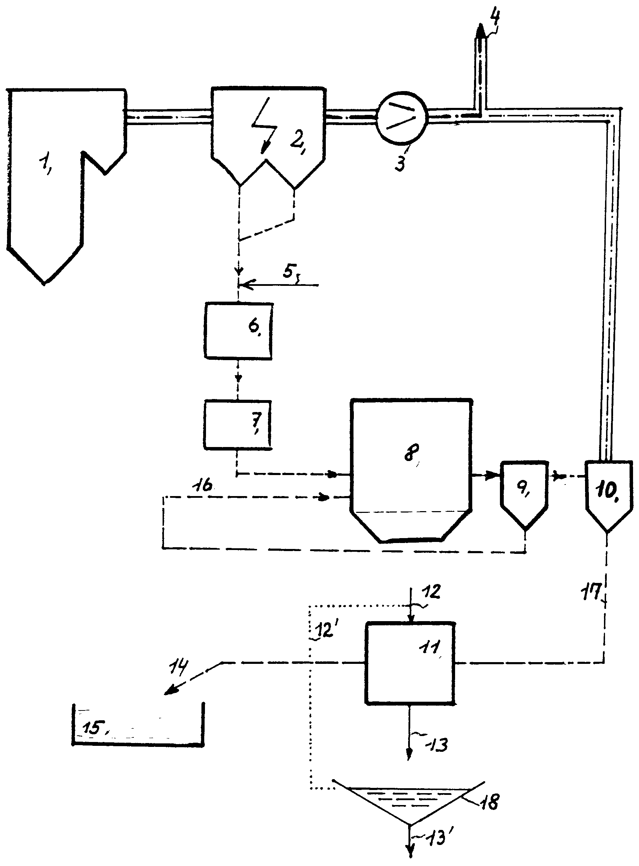

Die Figur zeigt, in einem Verfahrensschema einen ölbefeuerten Dampferzeuger 1 mit einem nachgeschalteten Elektrofilter 2, von dem die gereinigten Abgase mittels eines Saugzuggebläses 3 über einen Kamin 4 in die freie Atmosphäre geblasen werden. Weitere Umweltschutzeinrichtungen wie Entschwefelungseinrichtungen zur Verringerung der Stickoxide sind nicht dargestellt und können selbstverständlich vorgesehen werden. Die aus dem Elektrofilter anfallenden kohlenstoffreichen, insbesondere rußhältigen Filteraschen werden gesammelt und mit einem kohlenstoffhaltigen Bindemittel 5, wie z. B. Sägespäne, Wachse, Sulfitablauge, Steinkohlenteer aber auch Stärke oder Milchpulver vermischt und einer Kompaktiereinrichtung 6 und gegebenenfalls einem Zwischenlager 7 zugeführt. Die Aschen werden dadurch etwa auf 1/6 ihres ursprünglichen Volumens reduziert und liegen in Pelletform vor, sodaß sie leicht gefördert werden können. Diese Pellets werden nun einer Verbrennung 8 zugeführt, wobei sich besonders eine Wirbelbettverbrennung anbietet. Im Rahmen der Erfindung können aber auch Rostöfen, Drehrohröfen oder auch Schachtöfen verwendet werden, in welchen der Kohlenstoffgehalt und gegebenenfalls auch der Wasserstoffgehalt und anderer reduzierbarer Stoffe durch Verbrennung entfernt wird. Durch diese Maßnahme wird eine bedeutende Massenreduktion der Filterasche um mindestens 50 % erreicht. Die nun anfallenden Reststoffe (ausgebrannten Aschen) werden einem Klassierer 9 zugeführt, der beispielsweise als Zyklon ausgebildet ist, wobei die Grobfraktion über die Grobkornrückführung 16 direkt in die Wirbelbettverbrennung erfolgt. Die bei der Verbrennung entstehenden Abgase können einer Reinigungseinrichtung 10 beispielsweise Tuchfilter von den Stäuben befreit werden und eventuell über den Kamin 4 abgeführt werden. Die Stäube werden, wenn der Kohlenstoffgehalt vernachlässigbar ist über die Feinkornleitung 17 in eine Laugestation 11 gebracht, wobei durch Zuführung 12 der Schwefelsäure die Schwermetalle aus der Feinfraktion eluiert werden und in Form einer schwermetallreichen Schwefelsäurelösung von den inerten hauptsächlich von Silikaten gebildeten Resten abgetrennt, die über Pfeil 14 einer Deponie 15 zugeführt werden. Ist der Kohlenstoff nicht vernachlässigbar wird die Feinfraktion in die Kompaktiereinrichtung 6 rückgeführt und nochmals verbrannt. Da die schwermetallfreien Reste nunmehr verbesserte Deponieeigenschaften besitzen, sind diese auch für nachfolgende Generationen gefahrlos deponiefähig. Die schwermetallhältige Schwefelsäure 13 wird mittels Elektrodialyse in eine schwermetallhältige Lösung 13' und schwefelsäurehältige Lösung getrennt. Ein Großteil der Schwefelsäure steht damit über die Rückführung 12' wieder für die Auslaugung zur Verfügung. Anstelle der Elektrodialyse kann auch eine Elektrolysestation vorgesehen werden, in der die Schwermetalle von der Schwefelsäure getrennt werden.

Nachstehendes Beispiel zeigt die Reduktion des Gewichtes einer rußhältigen Elektrofilterasche aus einem schwerölbefeuerten Kraftwerk, bei dem 100 kg Elektrofilterasche mit 5 kg Stärke und 20 kg Wasser als Bindemittel gemischt und einem Kompaktierungsprozeß unterworfen wurden. Durch diese Maßnahme wurde die Schüttdichte versechsfacht. Da der Feinstaubanfall praktisch auf Null reduziert wurde bestand auch keine Gefahr einer Staubexplosion, sodaß die erhaltenen Pellets zwischengelagert werden konnten. Durch die Kompaktierung wird das Handling vereinfacht und der Transport kann über normale Förderbänder ohne gesundheitsgefährdende Staubentwicklung gefördert werden. Die Verbrennung der Pellets erfolgte im heißen Sandbett einer Wirbelschichtverbrennung im Temperaturbereich von 700 - 900° C, wobei der Kohlenstoffanteil (Ruß, organische Verbindungen, wie z. B. PAH's) zu mehr als 90 % verbrannt wurde. Die mit Schwermetallsalzen in Oxidform angereicherte Asche wurde aus dem Wirbelbett ausgetragen und in einem Fein- und Grobkornanteil aufgetrennt.

Im Grobkornanteil ist der noch unverbrannte Kohlenstoff sowie mitgerissener Sand enthalten und wird daher in das Wirbelbett rückgeführt. Der Feinkornanteil enthält die Schwermetall und die inerten Silikate, wobei die Schwermetalle durch Schwefelsäurebehandlung eluiert wurden, sodaß sie nach einer Abtrennung der Schwefelsäure als Metalle aufgearbeitet werden können. Die rückgewonnene bzw. abgetrennte Schwefelsäure kann wieder zur Auslaugung verwendet werden. Nach dieser Behandlung weisen die inerten Reststoffe nur mehr 20 % ihres ursprünglichen Gewichtes auf, sind inert und können problemlos ohne weitere Behandlungsschritte deponiert werden, wobei geringere Deponiermengen bei gleichzeitiger Schwermetallgewinnung anfallen.

Die Erfindung ist nicht auf die Behandlung von Elektrofilteraschen beschränkt, sie kann auch für Schlamm aus Rauchgaswäschern verwendet werden, wenn in diesem Ruß und andere kohlenstoffhaltige Verbindungen enthalten sind.

Besonders wirtschaftliche Bedeutung erhält die Erfindung, wenn in den Filterstäuben Vanadium enthalten ist, weiches bei der Verbrennung von vanadiumhältigen Erdölprodukten anfällt, und einen besonders hohen Rückgewinnungswert hat. In diesem Fall kann die Anlage aus dem Verkaufserlös finanziert werden und die Verringerung der Deponiekosten erhöht das Betriebsergebnis. Einen hohen wirtschaftlichen Anreiz besitzt auch die Rückgewinnung des Nickels.

## Patentansprüche

1. Verfahren zur Volumensverkleinerung von Aschen, insbesondere Filteraschen aus der Verbrennung von Erdölprodukten, dadurch gekennzeichnet, daß die kohlenstoffreichen, insbesondere rußhaltigen, Aschen mit einem kohlenstoffhaltigen Bindemittel vermischt und kompaktiert sowie anschließend einer Verbrennung vorzugsweise in einer Wirbelschicht, und gegebenenfalls die festen Reststoffe aus der Verbrennung einer weiteren Behandlung unterzogen werden.

2. Verfahren nach Anspruch 1, dadurch gekennzeichnet, daß die festen Reststoffe in eine fein-und eine Grobfraktion getrennt werden.

3. Verfahren nach Anspruch 2, dadurch gekennzeichnet, daß die Feinfraktion einer Laugung insbesondere mit Schwefelsäure zur Schwermetallextraktion, vorzugsweise zur Extraktion von Vanadium und/oder Nickel unterzogen wird.

4. Verfahren nach Anspruch 2, dadurch gekennzeichnet, daß die Feinfraktion in die kohlenstoffreiche Asche rückgeführt und mit dieser vermischt kompaktiert werden.

5. Verfahren nach Anspruch 2, dadurch gekennzeichnet, daß die Grobfraktion in die Wirbelschicht rückgeführt wird.

6. Verfahren nach Anspruch 3, dadurch gekennzeichnet, daß der Schwefelsäureextrakt mittels eines Elektrolyseverfahrens oder eines Elektrodialyseverfahrens in eine schwermetallhaltige und eine schwefelsäurehaltige Lösung getrennt wird.

7. Verfahren nach Anspruch 1, dadurch gekennzeichnet, daß die Verbrennung der kohlenstoffreichen kompaktierten Aschen in einem Rostofen, Drehrohrofen oder Schachtofen erfolgt.

8. Verfahren nach Anspruch 1, dadurch gekennzeichnet, daß als kohlenstoffhaltige Bindemittel Sägespäne, Wachse, Sulfitablauge, Steinkohlenteer aber auch verdorbene Stärke oder Milchpulver verwendet wird.

9. Verfahren nach Anspruch 1, dadurch gekennzeichnet, daß als kohlenstoffreiche Asche, Asche aus Pyrolyseprozessen, insbesondere Abfallpyrolyseanlagen verwendet werden.
